(19) Europäisches Patentamt
European Patent Office
Office européen des brevets

(11) EP 1 217 056 A1

(12) EUROPEAN PATENT APPLICATION

(43) Date of publication:
**26.06.2002 Bulletin 2002/26**

(51) Int Cl.$^7$: **C09K 3/18**

(21) Application number: **00128195.5**

(22) Date of filing: **21.12.2000**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **JOHNSON MATTHEY PUBLIC LIMITED COMPANY**
**London SW1Y 5BQ (GB)**

(72) Inventor: **The designation of the inventor has not yet been filed**

(74) Representative: **Wishart, Ian Carmichael**
**Patents Department**
**Johnson Matthey Technology Centre**
**Blount's Court**
**Sonning Common**
**Reading, RG4 9NH (GB)**

(54) **Photocatalytic material**

(57) The present invention relates to a permanently photcatalytic material effective to reduce the accummulation of soils, or break down of soils on the surface, or within a material. At least a proportion of the photocatalytic material comprises a sensitising agent which absorbs light in the visible and/or infra red region of the spectrum and a photocatalytic agent.

EP 1 217 056 A1

## Description

The present invention relates to 'self-cleaning' materials comprising a photocatalytic component effective to degrade soils deposited on or within said material, in particular the invention relates to materials comprising a photocatalytic agent and a sensitising agent which absorbs light substantially in the visible and/or the infrared region of the sprectrum, uses of said materials are also described.

Cleaning compositions intended for general and specific uses are well known in the art. Such compositions will normally comprise one or more surfactants, solvents thickening agents, abrasive particles, bleaching agents, disinfectant/antibacterial agents, perfumes, preservatives and colouring agents. Although these compositions are effective at removing soils, inevitably resoiling occurs after cleaning and thus recleaning is required.

The photocatalysed degradation of organic environmental pollutants in the presence of a semiconductor such as titanium dioxide or zinc oxide is well known (Ollis et al, Environ. Sci. and Technol., 12 (1991) 1522; Heller Am. Chem. Res. 28 (1995), 503). However, the chemical characteristics of these semiconductors necessitate excitation of these metals in the ultraviolet region of the spectrum in order for the degradation of the pollutants to occur. This requirement therefore makes the use of photocatalysed degradation of soils within a residential environment or commercial both potentially hazardous and impractical.

The present inventors have previously found, however, that the use of a sensitising agent in addition to the light absorbing material reduces the amount of energy required to be absorbed by said light absorber in order for charge separation to take place, and subsequently for the photocatalysed degradation of soils to occur. The present inventors have found that ambient light, for example sunlight or artificial light is sufficient in the presence of a sensitising agent and a light absorbing material to induce such a degradation.

The present inventors previously found (GB 9930248.1), in addition, that the use of transition metal polypyridine, macrocycle or phthalocyanine complexes can be used to sensitize a light absorbing agent (such as titanium dioxide or zinc oxide) not only when the light absorbing agent is coated onto a surface, but also when the agent is in solution. This makes the use of a light absorbing agent in conjunction with certain transition metal complexes in solution ideally suited for applying to a surface to provide a residue which will photocatalyse the decomposition of surface soils, and will also reduce the rate of accumulation of soils.

Previously, the photosensitization of nanocrystalline titanium dioxide (TiO2) films by polyimide bearing pendant substituted-Ru (bpy)3 +2 groups has been reported (Osora et al, J. Photochem. Photobiol. B: Biol. 43 (1998) 232). In this study it was found that these photosensitised complexes could degrade methylene blue.

Additionally, the use of metal complexes as photosensitisers in electrochemical cells is well established (Kalyanasundaram et al. Photo. Sens. And Photocat Using Inorg. And Organomet. Comps, 247-271). Now the use of particulate semiconductors such as TiO2 with sensitisers is resulting in the development of a new class of solar cell.

Graetzel et al (JACS V107, (1985), 2988 showed that tris(2,2'-bipyridyl-4,4'-dicarboxylate) ruthenium (II) dichloride is a superior sensitising agent for charge injection into titania at acid pH compared to tris(2,2'-bipridyl) ruthenium (II) dichloride due to the former having carboxylate anions capable of binding with titania under acid conditions. In this same work it was also shown that the sensitising properties of tris(2,2'-bipridyl) ruthenium (II) dichloride improve at pH 7 compared with lower pH.

Bendig et al (J Photochem Photobiology A: Chemistry 108 (1997) 89), describe the sensitised photocatalytic oxidation of herbicides using tris(2,2'-bipyridyl-4,4'-dicarboxylate) ruthenium (II) dichloride, tris(2,2'-bipridyl) ruthenium (II) dichloride and a methylated form of the latter. Bendig et al showed that only tris(2,2'-bipyridyl-4,4'-dicarboxylate) ruthenium (II) dichloride is active under acid conditions (pH 3) under their experimental conditions, and the authors presented data showing that tris(2,2'-bipyridyl-4,4'-dicarboxylate) ruthenium (II) dichloride desorbs progressively as the pH is raised whereas tris(2,2'-bipridyl) ruthenium (II) dichloride is more strongly absorbed with increasing pH. The authors explain the results on the basis that titania has a point of zero charge (PZC) such that the surface is positively charged below approximately pH6 and negatively charged at higher pH. Accordingly, under acid conditions sensitising agents carrying a negatively charged group can bind via electrostatic interaction, whereas positively charged groups will tend to be repelled. Conversely, at pH greater than the PZC value for titania, molecular moieties with positively charged groups will tend to bind more strongly with the $TiO_2$ surface.

One model of dye sensitization of the semi-conductor titanium dioxide, suggests that surface adsorbed dye molecules (sensitising agents) absorb visible light and inject electrons into the conduction band thus:

$$D + hv \rightarrow D^*$$

$$D^* + TiO2 \rightarrow D.^+ + (TiO2 + e\text{-}CB)$$

The conduction band electrons may then reduce oxygen to reactive species such as .OH radicals, which can rapidly attack organic molecules, i.e.

$$3D + 3hv + O2 + 3H+ -> 3D. + .OH + H2O$$

on TiO2

Alternatively or simultaneously D.+ may oxidise organic molecules. In this invention it will be understood by those skilled in the art that the sensitising agent is working in a catalytic manner i.e it is not significantly altered itself during the photocatalytic cleaning process, and is therefore active over a long period of time.

It would be advantageous if permanently photocatalyic materials could be developed in which soils deposited on, or within the material could be substantially degraded in visible or infrared light and also the rate of accumulation of soils could be diminished. That is, 'self-cleaning' materials could be generated. This is the problem the present invention sets out to address.

Thus in a first aspect the present invention provides a permanently photocatalyic material effective to substantially breakdown soils, or substantially reduce the accumulation of soils within, or on the surface of said material wherein at least a proportion of the material comprises a photocatalytic agent and a sensitising agent which absorbs light substantially in the visible and/or infrared region.

The term 'permanently photocatalytic material' in the context of the present invention means a material which has incorporated within a least a proportion of its structure, or on at least a proportion of its surface, a photocatalytic agent and a sensitising agent such that soils are substantially broken down, and/or the rate of accumulation of soils within, or on the surface of said material substantially reduced, without the need for the application of cleaning agents and/or compositions. Of course, certain soils may be desirably treated with other cleaning and/or absorbent materials.

The materials themselves may be in the form of a liquid, which may be aqueous or nonaqueous, it can be made into a gel, or a solid which may be particulate or non-particulate. The solid may be metal or metal alloy based, ceramic, polymeric, glass, or comprise coated including coated natural fibres.

The soils may be organic in nature and/or inorganic.

The term photocatalytic agent in the context of the present invention refers to an agent that has a favourable combination of electronic structure, light absorption properties, charge transport characteristics and excited-state lifetimes. Primary light absorbers for photocatalysis include but are not limited to semiconductor materials.

In the present invention, the photocatalytic material comprises a sensitising agent. Said agent is a metal complex sensitiser comprising a ligand with a conjugated $\pi$ system. The central atom of such complexes can be but is not limited to ruthenium, platinum, palladium, iridium, rhodium, osmium, rhenium, iron or copper, titanium or zinc. In one embodiment suitable sensitising agents include but are not limited to heterocyclic complexes which contain polypyridine, macrocyclic or phthalocyanine ligands and optionally other ligand types wherein at least one of the nitrogen groups is displaced by other donor groups. In a preferred embodiment of the invention the complex is any one or more of ruthenium II, III or IV or mixed oxidation state chelating complexes containing nitrogen donor atoms or a ruthenium (II), (III), (IV) or a mixed oxidation state polypyridine complex.

In a further embodiment the sensitising agent includes any one or more of the following groups: terpyridyls, bipyridyls, phthalocyanines, phorphyrins, tetra-aza-annulenes, pyrazines, phenanthrolines and derivatives thereof and compounds with substantially similar nitrogen based ring systems.

These groups may be derivatised to produce compounds containing positively-charged binding sites suitable for attachment to semiconductors. Thus the sensitisng agent may further include any one or more of $R_4N+$ or $R_4P+$ groups wherein each R group may be the same or different and is any one or more of the following groups: hydrogen, halogen, amine, alkyl, aryl, arylalkyl, alkoxy, heterocyclic groups, or derivatives thereof, including acid and ester derivatives, any of which may be branched or unbranched, substituted or unsubstituted,

In this way sensitising agents are specifically designed wherein the molecular structure functions in combination with semiconductors where the desired operating condition is such that the un-coated semiconductor surface presents adsorption sites with a negative charge. This will occur for instance where the composition containing said agent is of alkaline pH.

In one embodiment the sensitising agent may include a terpyridal group of general formula I shown below:

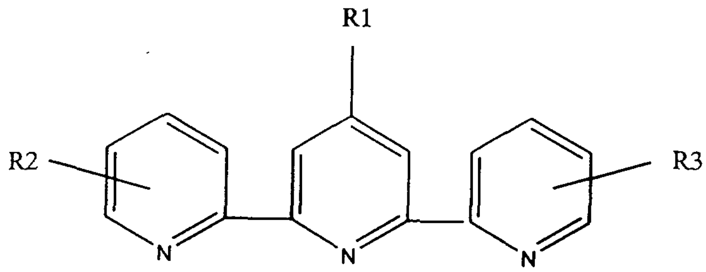

(I)

Where at least one of R1, R2 and R3 are positively charged groups which has the general formula II shown below:

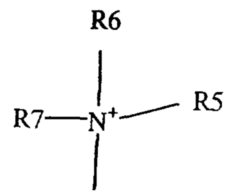

(II)

Where R5-R7 are any one or more of the following groups: hydrogen, halogen, amine, alkyl, aryl, arylalkyl, alkoxy, heterocyclic groups, or derivatives thereof, including acid and ester derivatives, any of which may be branched or unbranched, substituted or unsubstituted,

Alternatively, or in addition the sensitising agent may include a bipyridyl group having the general formula III shown below:

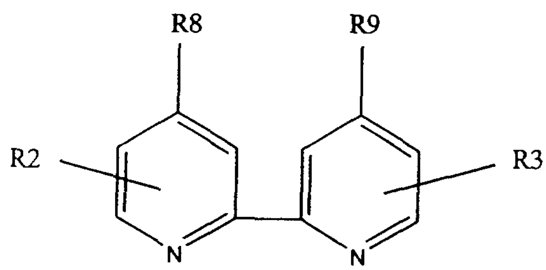

(III)

Where R8 and R9 can be the same or different and is any one or more of the following groups: hydrogen, halogen, amine, alkyl, aryl, arylalkyl, alkoxy, heterocyclic groups, or derivatives thereof, including acid and ester derivatives, any of which may be branched or unbranched, substituted or unsubstituted,

R2 may be the same or different from R3 and is any one or more of the following groups: hydrogen, halogen, amine, alkyl, aryl, arylalkyl, alkoxy, heterocyclic groups, or derivatives thereof, including acid and ester derivatives, any of which may be branched or unbranched, substituted or unsubstituted,

Alternatively, or in addition sensitising agents of the present invention may include phtalocyanines of general formula IV below:

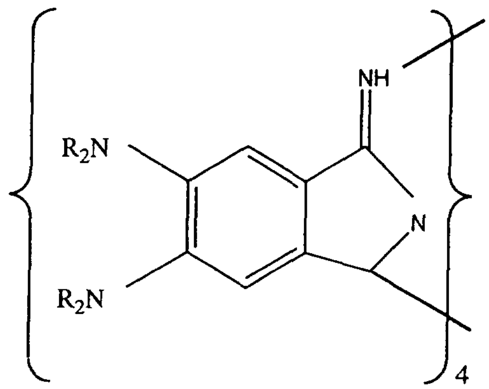

(IV)

Where each R group may be the same or different and is any one or more of the following groups: hydrogen, halogen, amine, alkyl, aryl, arylalkyl, alkoxy, heterocyclic groups, or derivatives thereof, including acid and ester derivatives, any of which may be branched or unbranched, substituted or unsubstituted,.

Alternatively, or in addition sensitising agents may include tetra-aza-annulenes (TADAs) of general formula V shown below.

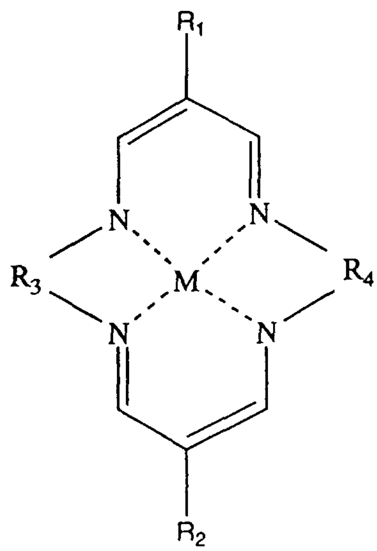

(V)

R1-R4 may be the same or different and is any one or more of the following groups: hydrogen, halogen, amine, alkyl, aryl, arylalkyl, alkoxy, heterocyclic groups, or derivatives thereof, including acid and ester derivatives, any of which may be branched or unbranched, substituted or unsubstituted,.

Alternatively, or in addition the bipyridyl compounds tris(2,2'-bipyridyl-4,4'-dicarboxylate) ruthenium (II) dichloride and tris(2,2'-bipridyl) ruthenium (II) dichloride can be dimerised using pyrazine derivitives such as pyrazine, pyrimidine and 4,4'-bipyridyl linking ligands using procedures well known in the art. Again as previously discussed these will be most suitable for use in operating conditions such that the un-coated semiconductor presents absorption sites with a negative charge.

The photocatalytically active material may be doped with an additional element which has the effect of reducing the energy required to promote an electron of the photochemically active material to the conductance band. Suitable doping agents may include but are not limited to platinum, palladium, cobalt, silver, copper, nickel or iron, tungsten, chromium. These may be present as the metals themselves, and/or as complexes and/or compounds thereof.

One skilled in the art will appreciate that generally the photocatalytic agent and the sensitising agent within the material structure should be substantially imperceptible to the user. This may be achieved by using agents with a microscopic particle size. The microscopic particle size also aids in achieving a uniform dispersion throughout the materials thus maximising the efficiency of the photochemical reaction. Preferably the particle size is less than 100nm, more preferably the particle size is less than 50nm and more preferably still it is less than 20nm.

In some circumstances one skilled in the art will appreciate the need for the photocatalytic agent and/or sensitising agent to possess larger particle sizes. This may be required when for instance the material is to be used as part of a decorative colour, for example on tiles or on lampshades.

On some occasions, the sensitising agent/s will be applied to a permanent material comprising a light absorbing agent.

Thus in a further aspect, the present invention provides the use of at least one sensitising agent according to the present invention in the sensitisation of a permanent material comprising at least one light absorbing agent.

The term 'permanent material' in the context of the present invention means a material which permanently comprises a light absorbing agent-ie the light absorbing agent is not substantially consumed during the lifetime of the material

In a further aspect, the present invention provides the use of photocatalytic material according to the present invention, for the preparation of permanently self cleaning items.

The term 'permanently self cleaning' items in the context of the present invention means that such that soils present on or within said items are substantially broken down, and/or the rate of accumulation of soils within, or on the surface of said items substantially reduced, without the need for the application of cleaning agents and/or compositions

Photocatalytic material of the present invention may form the basis of coatings for durable 'self-cleaning' saucepan coatings. It may be incorporated into tiles to form 'self-cleaning' tiles suitable for floors, walls and the like. The material of the present invention may also be formed into fibres which may be useful for the preparation of, for instance, 'self-clean' toothbrushes and cleaning brushes and the like. It may form the basis of fabric for needlework such that for example 'self-cleaning' cushions, upholstery, and curtains may be generated. One skilled in the art will appreciate that the list of potential uses of the material of the present invention is numerous. It may, for instance be in aqueous form in places where liquid is stored, for instance swimming pools so that the need for the addition of sterilising agents is obviated. Further uses include the use in road signs, traffic signs and the like. Materials of the present invention may also be used in 'anti-vandal' systems, for instance as an agent to 'breakdown' graffiti or as a coating on walls and the like which breaks down paint as it is being sprayed onto the wall. In addition the materials of the present invention may be useful for the removal of tattoos from the skin.

The photocatalytic material of the present invention may be incorporated into substrate materials or coated onto substrate materials by any suitable method including preferably incorporation into polymerisable or hardenable composition applied to the substrate by dipping, spraying, extrusion or the like. The vast number of applications of the invention permits individual uses to be developed by normal trial-and-error investigations.

The invention will now be described by way of the following example which is in no way limiting of the invention.

## EXAMPLE 1

The methods described below offer general synthetic pathways to sensitising agents specifically designed to function in combination with semiconductors where the desired operating condition is such that the un-coated semiconductor surface presents a significant number of adsorption sites with a negative charge. Typical positively charged groups for use as binding sites include, but are not limited to $R_4N+$ groups and $R_4P+$ groups, where R is as hereinbefore described

### Novel dyes based on terpyridyl

Terpyridyl-based sensitisers with phosphonate chelating ligands (Graetzel at al, WO 95/29924) and with other ligand types (Graetzel et al, WO 94/0449) have been used in conjunction with titania in dye-sensitised solar cells. The terpyridyl group of general formula I can be synthesised with e.g. R1 as a positively charged unit. One example where R5-7 of formula II are methyl, is synthesised according to procedures where the intermediate is made by the method outlined in Recl.Trav. Chim. Pays. Bas, 1959, v78, 408. This nitrated aryl group is then changed into the terpyridyl unit by the method outlined by McWhinne et al (J Organoetallic chem.., 1968, v11, 499). The nitro group is then reduced to the amine by hydrazine hydrate under Pd/C catalysis followed by reaction with excess methyl iodide to form the quaternary nitrogen terpyridyl ligand desired.

Yet another variant of the positively charged terpyridyl molecule [described by general formula I] can be synthesised by reacting 2-acetylpyridine with 4-nitrobenzaldehyde in base followed by ring closure with ammonium acetate according to methods outlined by E Constable et al (J Chem Soc Dalton Trans, 1992, 2947), followed by reduction of the nitro group to the amine and quaternisation as described previously to form a compound described by formula I with R2 and R 3 as hydrogen and R1 as

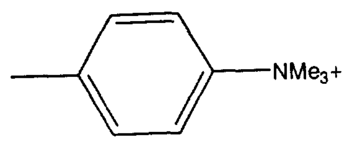

Yet another general preparative method for a terpyridal group of general formula I is based on derivatising the structure below (Potts et al, JACS 1987, v109, 3961) by oxidising it to the carboxylic acid by e.g. the methodology outlined by Dodd et al (Synthesis (1993), V3, 295). Amination of the carboxylate is then carried out by standard procedures outlined in e.g. Chem Rev. (1981) V81, p589.

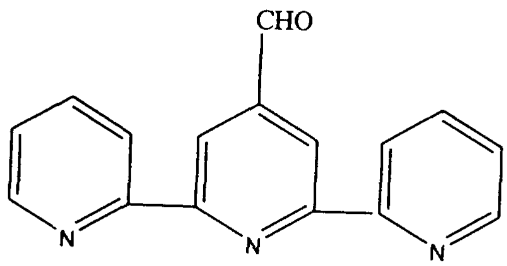

Bipyridyls

The synthesis of a compound of general formula III with R8,9 = NH2 is described in (JACS 1958, V80, 2745) and (J Chem Soc Perkin Trans 2, 1996, 613) and a compound of formula III can be quarternised by the preceding methods outlined for terpyridyls

Phthalocyanines

Phthalocyanine dyes can be synthesised with amine nitrogen groups by e.g. Buchwald ammination of halide precursors to produce outer-ring derivatives such as (J Org Chem 2000, V65, 1158), the amine groups of which are then quarternised.

Tetra-aza-annulenes (TADAs)

TADAs of the general formula V can be derivatised at R1, R2, R3, and R4 by the general methods outlined above.

Dimers

The bipyridyl compounds tris(2,2'-bipyridyl - 4,4'-dicarboxylate) ruthenium (II) dichloride and tris(2,2'-bipridyl) ruthenium (II) dichloride can be dimerised using pyrazine derivatives such as pyrazine, pyrimidine and 4,4'-bipyridyl linking ligands according to procedures detailed in (E A Seddon & K R Seddon, The Chemistry of Ruthenium, Elsevier, New York 1984, p 436).

## Claims

1. A permanently photocatalyic material effective to substantially breakdown soils, or substantially reduce the accumulation of soils within, or on the surface of said material wherein at least a proportion of the material comprises a photocatalytic agent and a sensitising agent which absorbs light substantially in the visible and/or infrared region.

European Patent Office

**PARTIAL EUROPEAN SEARCH REPORT** which under Rule 45 of the European Patent Convention shall be considered, for the purposes of subsequent proceedings, as the European search report

Application Number EP 00 12 8195

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 85 05119 A (STIFTUNG R E) 21 November 1985 (1985-11-21) * page 1, line 5 - line 10; claims 1-6,9,10; example 1 * --- | 1 | C09K3/18 |
| X | WO 89 02418 A (SIMMERING GRAZ PAUKER AG) 23 March 1989 (1989-03-23) * claims 1-28 * --- | 1 | |
| D,X | WO 95 29924 A (ECOLE POLYTECH ;GRAETZEL MICHAEL (CH); KOHLE OLIVER (CH); NAZEERUD) 9 November 1995 (1995-11-09) * claims 1-3; example D * --- | 1 | |
| A | EP 0 816 466 A (TOTO LTD) 7 January 1998 (1998-01-07) * claims 57,60-85,90-95,101; examples 22,35 * --- | 1 | |
| A | EP 0 590 477 A (TAKENAKA CORP) 6 April 1994 (1994-04-06) * claims 1-12 * ----- | 1 | TECHNICAL FIELDS SEARCHED (Int.Cl.7): C09K |

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| THE HAGUE | 17 May 2001 | Lehnert, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C07)

European Patent Office

**INCOMPLETE SEARCH SHEET C**

Application Number
EP 00 12 8195

Claim(s) searched completely:
-

Claim(s) searched incompletely:
1

Reason for the limitation of the search:

Present claim 1 relates to an extremely large number of possible compounds. Support within the meaning of Article 84 EPC and/or disclosure within the meaning of Article 83 EPC is to be found, however, for only a very small proportion of the compounds claimed. In the present case, the claim so lacks support, and the application so lacks disclosure, that a meaningful search over the whole of the claimed scope is impossible. Consequently, the search has been carried out for those parts of the claims which appear to be supported and disclosed, namely those compounds representing a photocatalytic material suitable for use as a self-cleaning material comprising a semiconductor material as primary light absorber and a sensitising agent containing a precious metal complex with an organic ligand (mentioned in the description, page 4, lines 24-27).

## ANNEX TO THE EUROPEAN SEARCH REPORT ON EUROPEAN PATENT APPLICATION NO. EP 00 12 8195

This annex lists the patent family membersrelating to the patent documents cited in the above-mentioned European search report.
The members are as contained in the European Patent Office EDP file on
The European Patent Office is in no way liable for these particulars which are merely given for the purpose of information.

17-05-2001

| Patent document cited in search report | Publication date | Patent family member(s) | Publication date |
|---|---|---|---|
| WO 8505119 A | 21-11-1985 | AT 44545 T | 15-07-1989 |
| | | DE 3571456 D | 17-08-1989 |
| | | EP 0179823 A | 07-05-1986 |
| | | JP 61502402 T | 23-10-1986 |
| | | US 4684537 A | 04-08-1987 |
| WO 8902418 A | 23-03-1989 | AT 389099 B | 10-10-1989 |
| | | AT 226687 A | 15-03-1989 |
| | | EP 0333787 A | 27-09-1989 |
| | | JP 2501541 T | 31-05-1990 |
| WO 9529924 A | 09-11-1995 | AU 697111 B | 24-09-1998 |
| | | AU 6511894 A | 29-11-1995 |
| | | DE 69415350 D | 28-01-1999 |
| | | DE 69415350 T | 01-07-1999 |
| | | EP 0758337 A | 19-02-1997 |
| | | JP 10504521 T | 06-05-1998 |
| | | US 5789592 A | 04-08-1998 |
| EP 0816466 A | 07-01-1998 | AU 718733 B | 20-04-2000 |
| | | AU 5014096 A | 08-10-1996 |
| | | BR 9607868 A | 30-06-1998 |
| | | CA 2215925 A | 26-09-1996 |
| | | DE 19681289 T | 16-04-1998 |
| | | CN 1184498 A | 10-06-1998 |
| | | DE 29623901 U | 06-07-2000 |
| | | JP 3094897 B | 03-10-2000 |
| | | JP 9076395 A | 25-03-1997 |
| | | JP 10146251 A | 02-06-1998 |
| | | WO 9629375 A | 26-09-1996 |
| | | JP 2943768 B | 30-08-1999 |
| | | JP 10156999 A | 16-06-1998 |
| | | JP 11070613 A | 16-03-1999 |
| | | JP 11153701 A | 08-06-1999 |
| | | JP 2000075114 A | 14-03-2000 |
| | | JP 2756474 B | 25-05-1998 |
| | | JP 2001026070 A | 30-01-2001 |
| | | US 6013372 A | 11-01-2000 |
| | | JP 9231819 A | 05-09-1997 |
| | | JP 9056788 A | 04-03-1997 |
| | | JP 9080357 A | 28-03-1997 |
| | | JP 9228072 A | 02-09-1997 |
| | | JP 9228073 A | 02-09-1997 |
| | | JP 9229493 A | 05-09-1997 |
| | | JP 9075243 A | 25-03-1997 |
| | | JP 9078541 A | 25-03-1997 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 00 12 8195

This annex lists the patent family membersrelating to the patent documents cited in the above-mentioned European search report.
The members are as contained in the European Patent Office EDP file on
The European Patent Office is in no way liable for these particulars which are merely given for the purpose of information.

17-05-2001

| Patent document cited in search report | Publication date | Patent family member(s) | Publication date |
|---|---|---|---|
| EP 0816466 A | | JP 9075245 A | 25-03-1997 |
| | | JP 9060067 A | 04-03-1997 |
| | | JP 9083005 A | 28-03-1997 |
| | | JP 3129194 B | 29-01-2001 |
| | | JP 9226054 A | 02-09-1997 |
| | | JP 9078274 A | 25-03-1997 |
| | | JP 2865065 B | 08-03-1999 |
| | | JP 9057912 A | 04-03-1997 |
| | | JP 9059045 A | 04-03-1997 |
| | | JP 3127827 B | 29-01-2001 |
| | | JP 9057911 A | 04-03-1997 |
| | | JP 9060443 A | 04-03-1997 |
| | | JP 9059041 A | 04-03-1997 |
| | | JP 9056742 A | 04-03-1997 |
| | | JP 9056549 A | 04-03-1997 |
| | | JP 9056535 A | 04-03-1997 |
| | | JP 9056550 A | 04-03-1997 |
| | | JP 9059042 A | 04-03-1997 |
| | | JP 9225392 A | 02-09-1997 |
| | | JP 9225385 A | 02-09-1997 |
| | | JP 9075841 A | 25-03-1997 |
| | | JP 9078454 A | 25-03-1997 |
| | | JP 9075633 A | 25-03-1997 |
| EP 0590477 A | 06-04-1994 | CA 2106510 A | 23-03-1994 |
| | | DE 69311866 D | 07-08-1997 |
| | | DE 69311866 T | 05-02-1998 |
| | | JP 6278241 A | 04-10-1994 |
| | | US 5595813 A | 21-01-1997 |
| | | US 5643436 A | 01-07-1997 |
| | | JP 6198196 A | 19-07-1994 |

EPO FORM P0459

For more details about this annex : see Official Journal of the European Patent Office, No. 12/82